# EUROPEAN PATENT APPLICATION

(11) **EP 4 717 065 A1**
(43) Date of publication of application: **01.04.2026**
(21) Application number: 25204192.6
(22) Date of filing: 24.09.2025
(51) Int. Cl.: A01D 34/00, A01D 34/82, A01D 34/46, A01D 34/67

(54) **WORKING MACHINE**

(30) Priority: 27.09.2024 JP 2024168199
(71) Applicant: Yamabiko Corporation, Ohme-shi, Tokyo 198-8760 (JP)
(72) Inventor: NAKANO, Kenji, Tokyo, 1988760 (JP)
(74) Representative: Winter, Brandl - Partnerschaft mbB

(57) **Abstract**

There is provided a working machine including: a main body configured to travel based on rotational power of a drive portion, and having a wireless communication function; an operation rod connected to the main body and configured to be gripped to assist the travel of the main body; and a controller arranged at an end of the operation rod and configured to operate the main body through wireless communication with the main body.

## Description

### BACKGROUND

The present disclosure relates to a working machine.

### RELATED ART

Patent Document 1 discloses an unmanned working vehicle.

This unmanned working vehicle includes a traveling device driven by power from a prime mover, a switching device that switches the transmission state from the prime mover to the traveling device, and a control system that includes a control unit for controlling actuation of the switching device. The unmanned working vehicle also includes a manual operation tool that is switchable to a usage state enabling human-powered assistance related to travel, and a notification means that notifies the control system of the switching to the usage state of the manual operation tool. The control system includes an auxiliary control unit for controlling actuation of the switching device in precedence over the control unit when the switching to the usage state of the manual operation tool is detected based on the notification from the notification means.

### PRIOR ART DOCUMENTS

### Patent document

[Patent Document 1] JP 2016-185134 A

### SUMMARY

### Problems to be Solved by Invention

However, the unmanned working vehicle disclosed in Patent Document 1 is a working machine that is designed to travel by remote control, and is not operated using a travel assistant handle, which is an example of the manual operation tool. Furthermore, in a working machine allowed to travel using an operation rod, it has been necessary to connect a controller arranged on the operation rod to a main body with wiring, which may cause interference during operation due to wiring routing.

In view of the above circumstances, the present disclosure provides a working machine or the like that does not require wiring that connects a controller arranged on an operation rod to a main body.

### Means for Solving Problems

According to an aspect of the present disclosure, there is provided a working machine, including: a main body configured to travel based on rotational power of a drive portion, and having a wireless communication function; an operation rod connected to the main body and configured to be gripped to assist the travel of the main body; and a controller arranged at an end of the operation rod and configured to operate the main body through wireless communication with the main body.

According to such an aspect, it is possible to eliminate the need for wiring that connects the controller arranged on the operation rod to the main body.

### BRIEF DESCRIPTION OF DRAWINGS

FIG. 1 shows an example of an overall configuration of a grass mower 11.
FIG. 2 is a perspective view showing an appearance of the grass mower 11.
FIG. 3 is a front view showing an appearance of the grass mower 11.
FIG. 4 is a left side view showing an appearance of the grass mower 11.
FIG. 5 is a rear view showing an appearance of the grass mower 11.
FIG. 6 is a top view showing an appearance of the grass mower 11.
FIG. 7 is a bottom view showing the grass mower 11 with some components omitted.
FIG. 8 is a perspective view showing the grass mower 11 with some components omitted.
FIG. 9 is a top view showing the grass mower 11 with some components omitted.
FIG. 10 shows a state in which an operation rod 32 has been removed from the grass mower 11.
FIG. 11 shows a state in which a gripping portion 32a and a connecting portion 32b of the operation rod 32 have been removed.
FIG. 12A shows a state in which the gripping portion 32a and a controller 5 are configured integrally, FIG. 12B shows a state in which the controller 5 has been removed from the gripping portion 32a, and FIG. 12C shows the controller 5 removed from the gripping portion 32a.
FIG. 13 shows a state in which the length of the connecting portion 32b of the operation rod 32 is made shorter than the length of the connecting portion 32b shown in FIG. 2.

### DETAILED DESCRIPTION

Hereinafter, an embodiment of the present disclosure will be described with reference to the drawings. Various features described in the embodiment below can be combined with each other.

A program for implementing the software described in an embodiment may be provided as a non-transitory computer-readable medium, may be made available for download via an external server, or may be provided in such a manner that the program can be executed on an external computer to realize functions thereof on a client terminal (so-called cloud computing).

In addition, in various types of information processing according to an embodiment, an input and an output in response to the input can be realized. Here, if an output is obtained as a result of an input, the form of information referenced in such information processing (hereinafter referred to as reference information) is not limited. The reference information may be, for example, rule-based information such as a database, a lookup table, or a predefined function (including decision formulas such as regression equations constructed using statistical methods), a pretrained model that has learned the correlations between inputs and outputs, or a large language model that can output a desired result in response to a prompt.

The term "unit" in an embodiment may include, for example, a combination of hardware resources implemented by circuits in a broad sense and information processing of software that can be specifically realized using those hardware resources. Furthermore, various types of information are handled in one embodiment. Such information can be represented, for instance, by physical values of signal values indicating voltage or current, by high and low levels of signal values as a set of binary bits consisting of 0s and 1s, or by quantum superposition (so-called qubits), and communication and computation can be performed on a circuit in a broad sense.

Furthermore, the term "the circuit in a broad sense" is a circuit realized by appropriately combining at least a circuit, circuitry, a processor, a memory, or the like. The processor may be a general-purpose processor or a dedicated circuit. In other words, the term "circuit in a broad sense" may include an application specific integrated circuit (ASIC), a programmable logic device (e.g., simple programmable logic device (SPLD), a complex programmable logic device (CPLD), field programmable gate array (FPGA)), and the like.

### 1. Overall configuration

Chapter 1 describes a working machine 1 according to one embodiment. The working machine 1 is configured to travel in order to perform predetermined work. The following explanation focuses on the case where the working machine 1 is the grass mower 11.

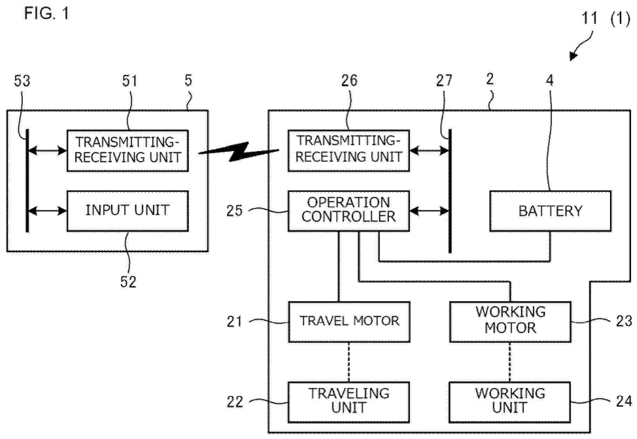

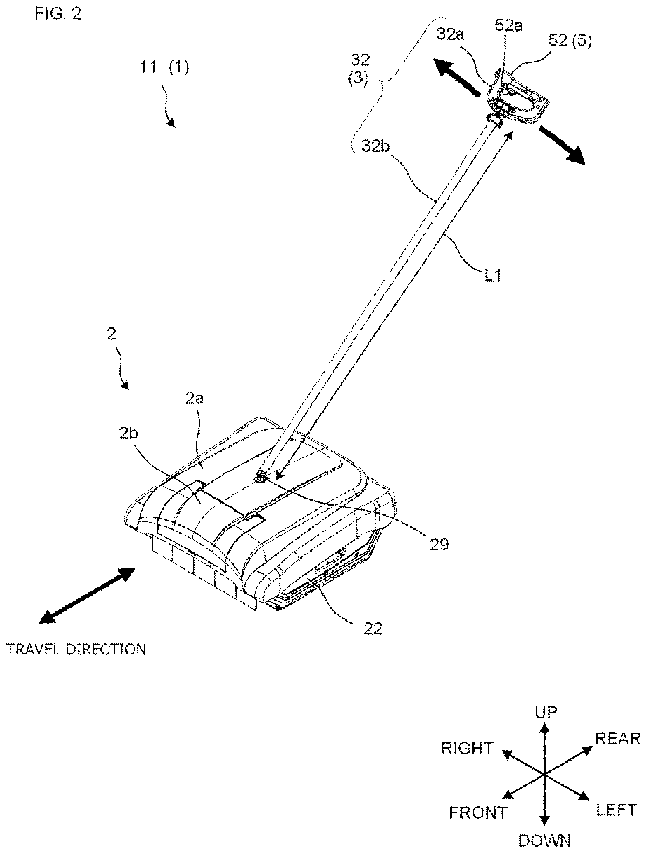

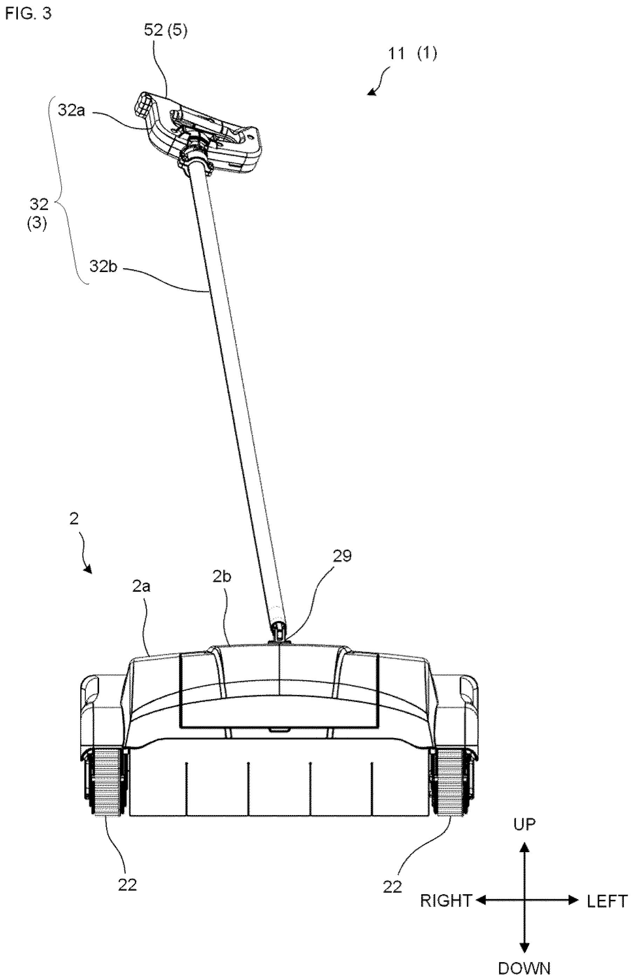

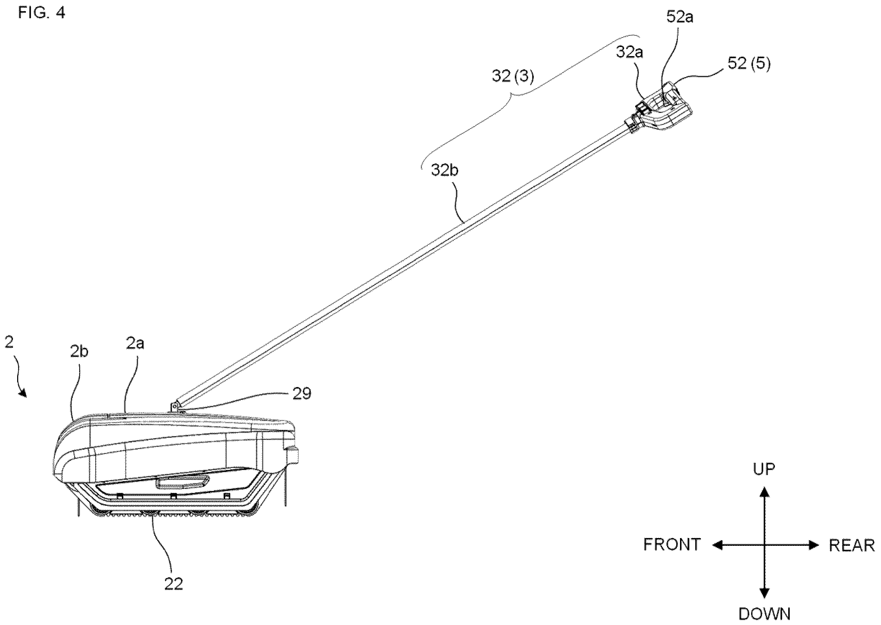

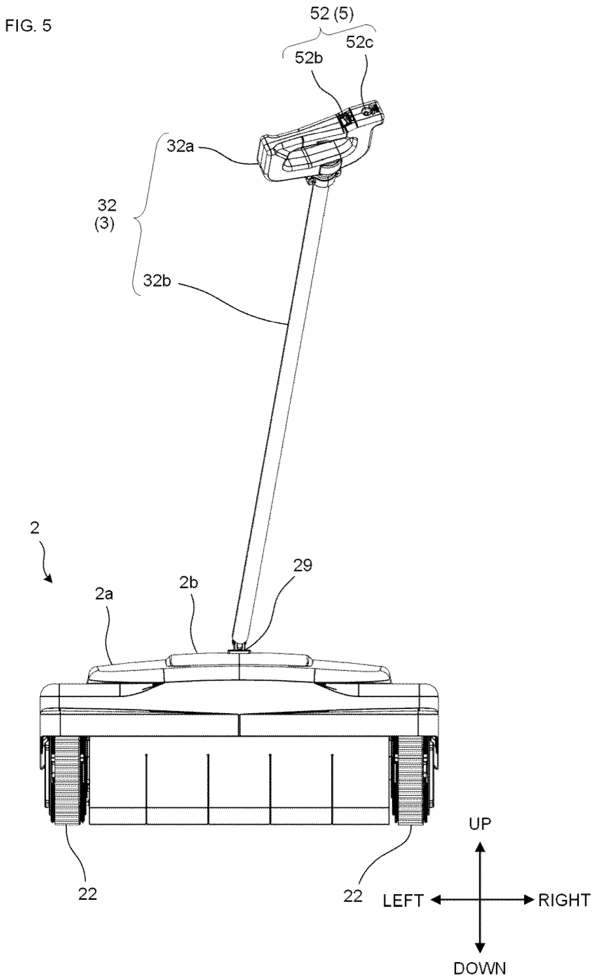

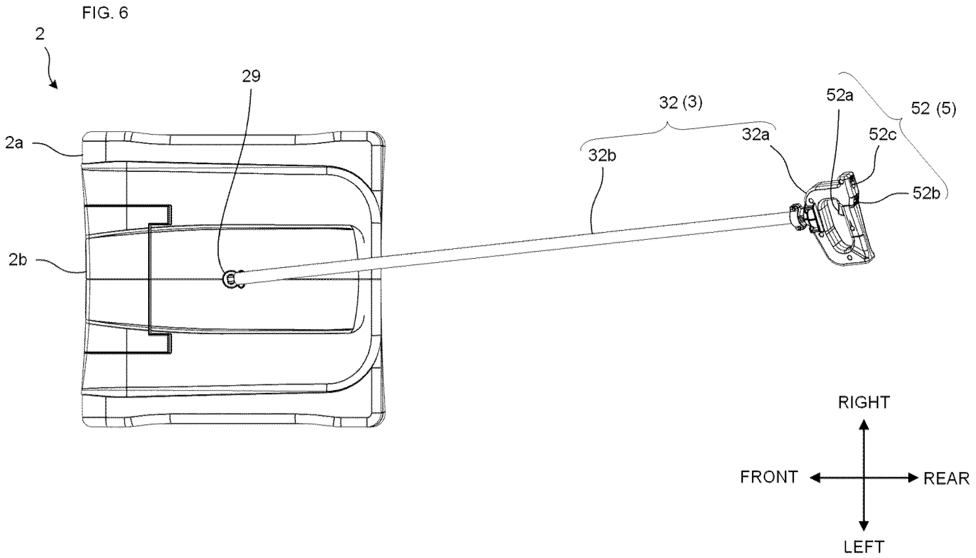

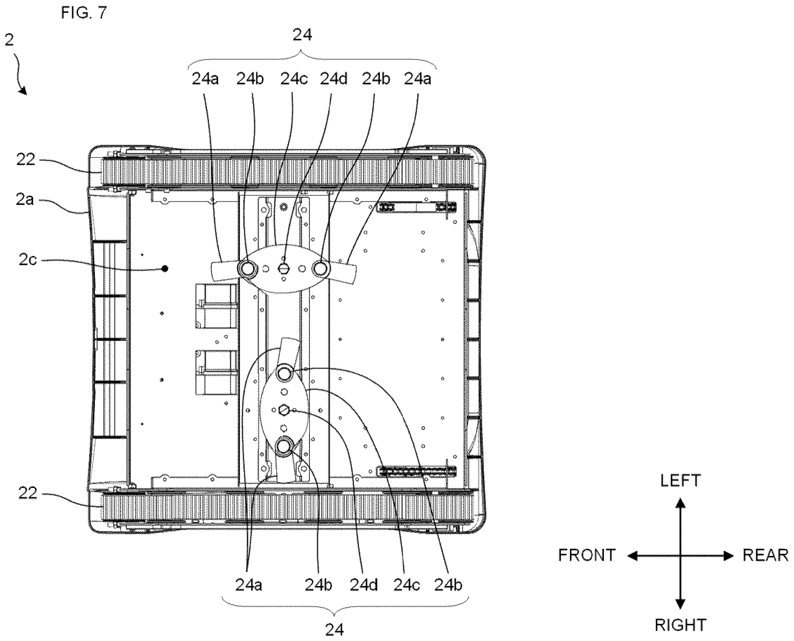

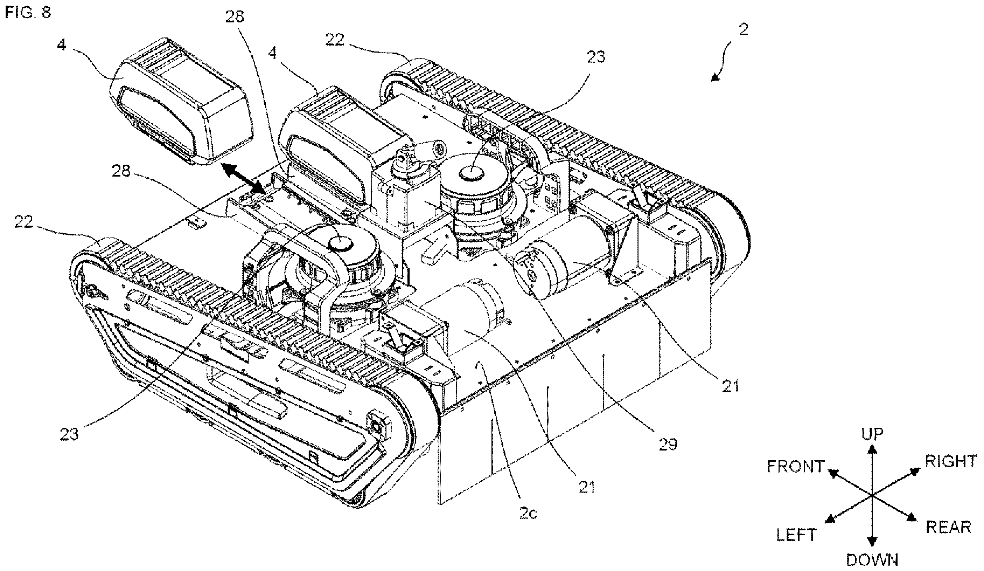

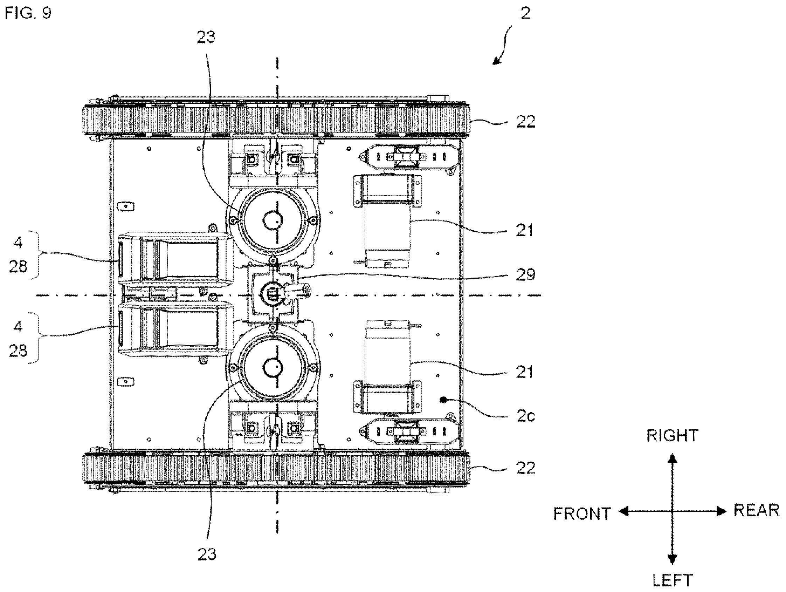

FIG. 1 shows an example of the overall configuration of the grass mower 11. FIG. 2 is a perspective view showing an appearance of the grass mower 11. FIG. 3 is a front view showing an appearance of the grass mower 11. FIG. 4 is a left side view showing an appearance of the grass mower 11. FIG. 5 is a rear view showing an appearance of the grass mower 11. FIG. 6 is a top view showing an appearance of the grass mower 11. FIG. 7 is a bottom view showing the grass mower 11 with some components omitted. FIG. 8 is a perspective view showing the grass mower 11 with some components omitted. FIG. 9 is a top view showing the grass mower 11 with some components omitted.

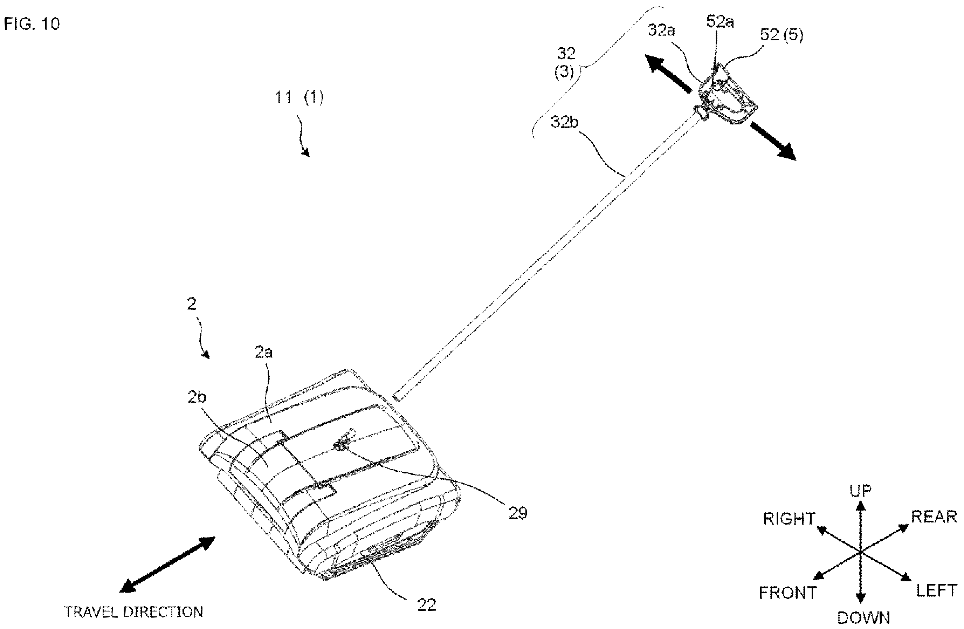

In the following description, directions of the grass mower 11 and each component constituting the grass mower 11 are defined based on "up", "down", "left", "right", "front" and "rear" shown in FIG. 2 to FIG. 9 described above, and FIG. 10 to FIG. 13 in Chapter 2. Furthermore, in the following description, "up" is also referred to as an "upper side" or "upper", and "down" is also referred to as a "lower side" or "lower". Moreover, the direction formed by "up" and "down" is referred to as "up and down" or "up-down direction". The same applies to "left", "right", "front" and "rear".

### (Grass mower 11)

As shown in FIG. 1 and FIG. 2, the grass mower 11 that is the working machine 1 includes a main body 2, an operation unit 3 including an operation rod 32, a battery 4, and a controller 5. The grass mower 11 has a travel function and a work function and performs mowing work while traveling.

### (Main body 2)

As shown in FIG. 1 and FIG. 8, the main body 2 includes travel motors 21 (corresponding to a "drive portion" in claims), traveling units 22, working motors 23, working units 24, an operation controller 25, a transmitting-receiving unit 26, a communication bus 27, mounting portions 28, and an attachment portion 29.

As shown in FIG. 2 and FIG. 8, the main body 2 includes an upper cover 2a and a lower support plate 2c. As shown in FIG. 2 to FIG. 6, the upper cover 2a is lid-shaped and is provided so as to cover from above the components constituting the main body 2, which is mounted on the lower support plate 2c. As shown in FIG. 2 and FIG. 6, the upper cover 2a includes an opening/closing portion 2b that can be opened and closed. By opening the opening/closing portion 2b, it is possible to check or operate each component constituting the main body 2, which is covered by the upper cover 2a. In other words, the opening/closing portion 2b makes it possible to check or operate each component without removing the upper cover 2a from the grass mower 11. The lower support plate 2c has a plate shape and is arranged below the upper cover 2a. Various components constituting the main body 2, that is, the travel motors 21, the traveling units 22, the working motors 23, the working units 24, the operation controller 25, the transmitting-receiving unit 26, the communication bus 27, the mounting portions 28, and the attachment portion 29, are mechanically connected to the lower support plate 2c. Among these, the attachment portion 29 is provided so as to protrude from the upper cover 2a. The description of the attachment portion 29 will be provided in the section concerning the operation unit 3.

The travel motor 21 that is a drive portion is an electric motor and is configured to generate rotational power for causing travel of the main body 2. Specifically, as shown in FIG. 8, in the grass mower 11, a total of two travel motors 21 are arranged, one on each of the left and right sides, at the rear side of the upper surface of the lower support plate 2c. The travel motors 21 are mechanically connected to the traveling units 22 directly or via a chain, a gear, etc. (not shown). By using an electric motor as the drive portion, a battery can be used in common to supply power to the wireless communication function of the main body 2 and as a power source for the working machine.

The traveling units 22 are supplied with rotational power from the travel motors 21 to cause the grass mower 11 to travel. In other words, the main body 2 is configured to travel based on the rotational power of the travel motors 21 that are the drive portions. As shown in FIG. 3 to FIG. 5, each of the traveling units 22 is a continuous track, also known as a "caterpillar" (Caterpillar is a registered trademark) in the grass mower 11. It should be noted that each traveling unit 22 is not limited to a continuous track, but may be, for example, a tire or the like.

The working motor 23 is an electric motor and is configured to generate rotational power for performing mowing work. Specifically, as shown in FIG. 8, in the grass mower 11, a total of two working motors 23 are arranged, one on each of the left and right sides, substantially at the center of the upper surface of the lower support plate 2c in the front-rear direction. Each of the working motors 23 is mechanically connected to each of the working units 24 directly or via a chain, a gear, etc. (not shown).

The working units 24 are supplied with rotational power from the working motors 23 to perform predetermined work. As shown in FIG. 7, in the grass mower 11, each of the working units 24 is configured to mow vegetation such as grass by rotating, with the rotation driven by the rotational power of the working motors 23. Specifically, each of the working units 24 is of a free knife type including cutting blade shafts 24b, a cutting blade attachment portion 24c, and a rotary shaft 24d, and is a free-knife type working unit 24. In detail, each of the cutting blades 24a has a plate shape and rotates about the rotary shaft 24d via the cutting blade attachment portion 24c while the grass mower 11 travels, thereby mowing grass, trees and the like that comes into contact with the cutting blades 24a. The cutting blade attachment portion 24c has an elliptical shape, and has the rotary shaft 24d connected thereto substantially at the center. Also, the cutting blade attachment portion 24c rotates in a plane defined by the front-rear and left-right directions. The cutting blade attachment portion 24c includes cutting blade shafts 24b at both longitudinal ends. The cutting blades 24a are connected to both the upper and lower sides of each cutting blade shaft 24b. Furthermore, each of the cutting blades 24a is attached to each of the cutting blade shafts 24b of the cutting blade attachment portion 24c so as to rotate within a predetermined range around each cutting blade shaft 24b. The working unit 24 is not limited to the free-knife type, and may adopt, for example, a bar knife type, a cross knife type, or a hammer knife type. Furthermore, a resin cord such as a nylon cord, a metal blade (a reel blade, a tipped saw, a shredder blade, etc.), a resin blade, a reciprocating blade, or the like may also be adopted.

As shown in FIG. 1, the energization from the battery 4 to the travel motors 21 and the working motors 23 is controlled by the operation controller 25. In other words, the operation controller 25 is electrically connected to the travel motors 21, the working motors 23, and the battery 4 by wiring, a connector, or the like, and controls the energization from the battery 4 to the travel motors 21 and the working motors 23. In this manner, the operation controller 25 is configured to electrically control the rotation of the travel motors 21 and the working motors 23. In addition, the operation controller 25 and the transmitting-receiving unit 26 are electrically connected via the communication bus 27. The transmitting-receiving unit 26 has a wireless communication function and performs wireless communication with the controller 5. Therefore, the main body 2 has a wireless communication function. The details of the battery 4 and the controller 5 will be described later.

As shown in FIG. 8, each of the mounting portions 28 has a plate shape and is configured to allow each battery 4, which is used to supply power to the travel motor 21, to be detachably attached. Each of the mounting portions 28 is arranged at the front side of the upper surface of the lower support plate 2c, close to substantially the center in the left-right direction. Each of the mounting portions 28 is inclined so as to approach the lower support plate 2c as it goes from the front toward the rear.

### (Operation unit 3)

As shown in FIG. 2, the operation unit 3 includes at least one attachment portion 29 and an operation rod 32. The operation rod 32 is connected to the main body 2 via the attachment portion 29 and is configured to be gripped to assist the travel of the main body 2.

As shown in FIG. 8 and FIG. 9, the attachment portion 29 is box-shaped and is arranged substantially at the center of the upper surface of the lower support plate 2c. The attachment portion 29 fixes the operation rod 32 in place and connects the main body 2 and the operation rod 32.

As shown in FIG. 2, the main body 2 is connected to the operation rod 32 via the attachment portion 29. The operation rod 32 includes a gripping portion 32a and a connecting portion 32b. The gripping portion 32a is integrated with the controller 5 to form an annular shape, and is gripped by the operator inserting his or her hand into the inside of the annular opening. In FIG. 2, the connecting portion 32b is connected to the lower side of the gripping portion 32a. The connecting portion 32b is pipe-shaped and connects the attachment portion 29 and the gripping portion 32a. In other words, the operation rod 32 is connected to the main body 2 via the attachment portion 29 and is configured to be gripped to assist the travel of the main body 2. The details of the operation rod 32 will be described later.

### (Battery 4)

As shown in FIG. 8, each of the batteries 4 is detachably attached to each of the mounting portions 28 of the main body 2 at the front side of the main body 2. Each battery 4 is configured by housing a secondary battery such as a lithium ion secondary battery, in a rectangular parallelepiped case. Each battery 4 is a battery pack that can be attached to and detached from the mounting portion 28 by sliding the battery 4 in the front-rear direction. In the grass mower 11, two batteries 4 are mounted, but this is not limited thereto. The grass mower 11 may be provided with one or three or more mounting portions 28, and the battery 4 may be mounted on each of the mounting portions 28.

### (Controller 5)

As shown in FIG. 1, the controller 5 includes a transmitting-receiving unit 51 and an input unit 52. The transmitting-receiving unit 51 and the input unit 52 are electrically connected via a communication bus 53. As shown in FIG. 2, the controller 5 is arranged at the end of the operation rod 32 and is integrally configured with the gripping portion 32a of the operation unit 3. The controller 5 is a controller having a wireless communication function, and is configured to operate the main body 2 via wireless communication with the main body 2 based on an operation by an operator.

The transmitting-receiving unit 51 in the controller 5 transmits a signal generated by the input unit 52 to the transmitting-receiving unit 26 in main body 2 via wireless communication. In other words, the transmitting-receiving unit 26 in the main body 2 receives the signal generated by the input unit 52 from the transmitting-receiving unit 51 in the controller 5 via wireless communication. The operation controller 25 executes control in accordance with the signal received by the transmitting-receiving unit 26.

As shown in FIG. 6, the input unit 52 includes a travel input lever 52a, a direction input lever 52b, and a cutting blade input lever 52c. The travel input lever 52a is an input means for increasing or decreasing the travel speed of the main body 2. The travel input lever 52a is configured to control the travel speed of the main body 2 via a drive switch (not shown). Furthermore, the direction input lever 52b is an input means for inputting the travel direction of the main body 2. In addition, the cutting blade input lever 52c is an input means for switching on/off to rotate the working units 24.

### 2. Details of operation rod 32 and controller 5

Chapter 2 describes the details of the operation rod 32 and the controller 5 in the present embodiment.

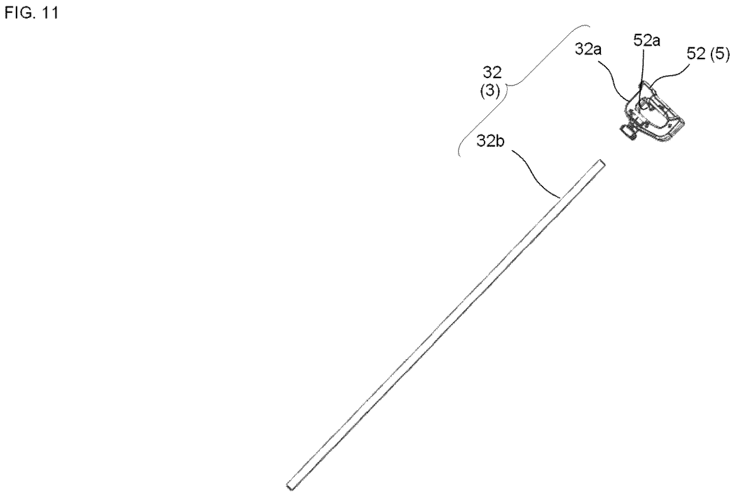

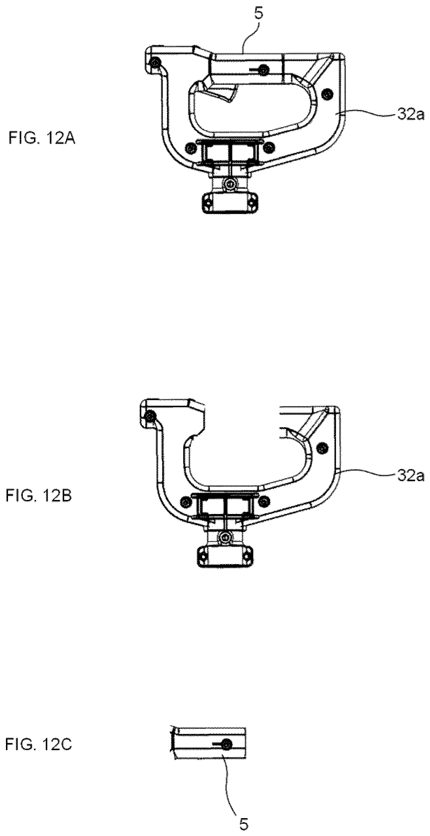

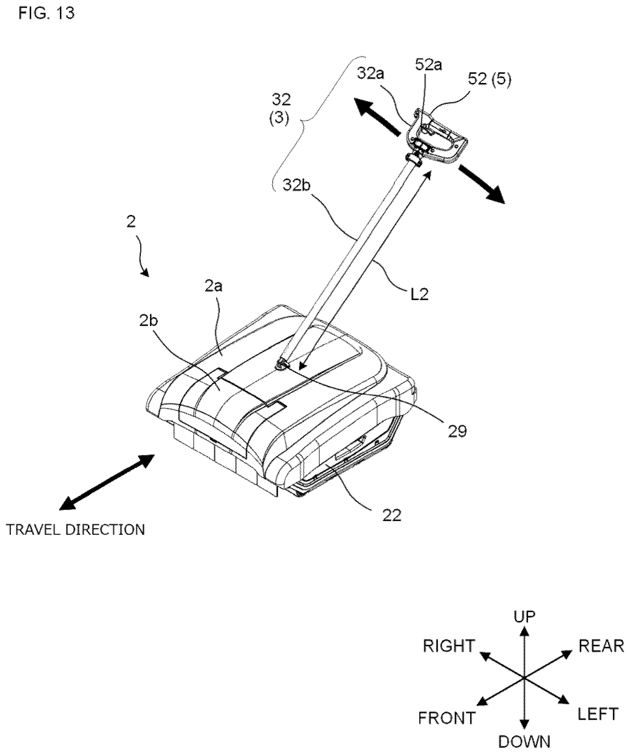

FIG. 10 shows a state in which the operation rod 32 has been removed from the grass mower 11. FIG. 11 shows a state in which the gripping portion 32a and the connecting portion 32b of the operation rod 32 have been removed. FIG. 12A shows a state in which the gripping portion 32a and the controller 5 are configured integrally, FIG. 12B shows a state in which the controller 5 has been removed from the gripping portion 32a, and FIG. 12C shows the controller 5 removed from the gripping portion 32a. FIG. 13 shows a state in which the length of the connecting portion 32b of the operation rod 32 is made shorter than the length of the connecting portion 32b shown in FIG. 2.

As shown in FIG. 10, the operation rod 32 is configured to be removable from the main body 2. That is, in the case where the operation rod 32 is mounted to the main body 2, the operation rod 32 is fixed to the attachment portion 29, and the operator can assist the travel of the grass mower 11 by holding the gripping portion 32a. Especially in places where it is difficult for the grass mower 11 to travel independently, such as on a steep slope or near watersides, the operator can attach the operation rod 32 to the grass mower 11 to avoid the overturning of the grass mower 11 or wheel drop-off. On the other hand, when removing the operation rod 32 from the main body 2, for example, the operation rod 32 is rotated while being pushed towards the main body 2, thereby releasing the fixation of the operation rod 32 by the attachment portion 29. In other words, the operation rod 32 is configured to be attachable to and detachable from the main body 2. According to such an aspect, the grass mower 11 can be remotely operated by the controller in places where human-powered travel assistance using the operation rod is not required, such as flat ground, or in dangerous places where it is difficult for an operator to enter.

As shown in FIG. 11, the operation rod 32 is configured so that the gripping portion 32a and the connecting portion 32b can be separated. That is, in the state where the gripping portion 32a and the connecting portion 32b are connected, the connecting portion 32b is connected to the gripping portion 32a, for example, by a stopper (not shown) that is arranged at the connected portion of the gripping portion 32a with the connecting portion 32b. On the other hand, when the gripping portion 32a and the connecting portion 32b are to be separated, the connection of the connecting portion 32b to the gripping portion 32a is released, for example, by disengaging the stopper on the gripping portion 32a.

As shown in FIG. 12A, in the case where the operation rod 32 is used to assist the travel of the grass mower 11, the gripping portion 32a and the controller 5 are integrated with each other to form an annular shape, and the annular-shaped portion is gripped by the operator inserting his or her hand into the inside of the annular-shaped portion. In this case, the grass mower 11 is operated using the controller 5 while assisting the travel of the grass mower 11 by human power as appropriate. On the other hand, in an environment where there is no need to assist the travel of the grass mower 11, such as when performing mowing work on flat ground, the operator may remotely operate the grass mower 11 using the controller 5. In this case, as described above, the operator releases the fixation between the main body 2 and the operation rod 32 first, and then may either use the controller 5 integrated with the gripping portion 32a, or may remove the controller 5 from the gripping portion 32a and use the controller 5. When the controller 5 is removed from the gripping portion 32a, the gripping portion 32a and the controller 5 become independent of each other, as shown in FIG. 12B and FIG. 12C. The operator can then use the controller 5 to remotely operate the grass mower 11. In other words, the controller 5 is configured to be attachable to and detachable from the operation rod 32. According to such an aspect, the position of the controller can be flexibly set in accordance with the working style of the operator and the working environment, i.e., the distance between the working machine and the operator can be arbitrarily changed.

The length of the connecting portion 32b in the operation rod 32 is configured to be adjustable. In other words, the length L2 of the connecting portion 32b shown in FIG. 13 is shorter than the length L1 of the connecting portion 32b shown in FIG. 2. For example, when the grass mower 11 travels on a slope, the grass mower 11 tends to slide downward due to its own weight. Thus, when the operator allows the grass mower 11 to travel on a slope, the operator uses the operation rod 32 to assist the grass mower 11 in traveling and prevent the grass mower 11 from sliding downward.

Here, a case is assumed in which grass is mowed on a slope along a footpath between rice fields. When the operator allows the grass mower 11 to travel on the upper side of the slope along the footpath between rice fields, shortening the distance between the operator and the grass mower 11 improves work efficiency. Thus, the operation rod 32 can be shortened by adjusting the length of the connecting portion 32b, thereby allowing the grass mower 11 to travel more stably. On the other hand, when the operator allows the grass mower 11 to travel on the lower side of the slope along the footpath between rice fields, a greater distance is needed between the operator and the grass mower 11. Thus, the connecting portion 32b can be extended to secure the length of the operation rod 32, thereby allowing the grass mower 11 to travel more stably.

Here, the connecting portion 32b of the operation rod 32 is adjusted to any length within the extendable and retractable range and then fixed. The connecting portion 32b may be of a lever-lock type, for example, in which the length can be adjusted when the lever is raised. The length may also be fixed by tilting the lever. In other words, the operation rod 32 is configured to be extendable and retractable, and is configured to be fixable at any length within the extendable and retractable range. According to such an aspect, the distance between the working machine and the operator can be arbitrarily adjusted. Even if the appropriate distance varies depending on the height of the operator, the length of the operation rod 32 can be adjusted to allow the operator to work in a comfortable posture for each.

According to the present embodiment, it is possible to eliminate the need for wiring that connects the controller arranged on the operation rod to the main body. As a result, the operation rod can be attached, detached, extended, and retracted (as described above) smoothly. In addition, when performing operations such as turning the working machine with the operation rod attached, operability is improved, for example, by enabling the avoidance of interference with work caused by wiring routing.

Although the embodiments of the present disclosure have been described above, the present disclosure is not limited thereto and can be modified as appropriate without departing from the technical concept of the present disclosure.

### 3. Variations

Chapter 3 describes variations of the present embodiment. The following variations can be combined as appropriate.

In the present embodiment, the case where the working machine 1 is the grass mower 11 has been described as an example. However, the working machine 1 is not limited thereto. For example, the working machine 1 may be the grass mower 11, a collector (not shown) that collects trash, golf balls or the like that have fallen on the ground, or a spreader (not shown). According to such an aspect, the grass mower, the collector, or the spreader with further improved operability can be used to perform predetermined work of each machine.

In the present embodiment, the electric motor has been described as an example of the drive portion. However, the drive portion is not limited thereto. The drive portion may be, for example, an engine that uses gasoline as fuel.

### 4. Others

The present disclosure may be provided in each of the following aspects.
(1) A working machine, comprising: a main body configured to travel based on rotational power of a drive portion, and having a wireless communication function; an operation rod connected to the main body and configured to be gripped to assist the travel of the main body; and a controller arranged at an end of the operation rod and configured to operate the main body through wireless communication with the main body.
   According to such an aspect, it is possible to eliminate the need for wiring that connects the controller arranged on the operation rod to the main body.
(2) The working machine according to (1), wherein the operation rod is configured to be attachable to and detachable from the main body.
   According to such an aspect, the working machine can be remotely operated by the controller in places where the operation rod is not required, such as flat ground.
(3) The working machine according to (1) or (2), wherein the controller is configured to be attachable to and detachable from the operation rod.
   According to such an aspect, the position of the controller can be flexibly set in accordance with the working style of the operator and the working environment.
(4) The working machine according to any one of (1) to (3), wherein the operation rod is configured to be extendable and retractable, and is configured to be fixable at any length within an extendable and retractable range.
   According to such an aspect, the distance between the working machine and the operator can be arbitrarily changed.
(5) The working machine according to any one of (1) to (4), wherein the drive portion is an electric motor.
   According to such an aspect, a battery can be used in common to supply power to the wireless communication function of the main body and as a power source for the working machine.
(6) The working machine according to any one of (1) to (5), wherein the working machine is a grass mower, a collector, or a spreader.

According to such an aspect, the grass mower, the collector, or the spreader with further improved operability can be used to perform predetermined work of each machine.

Of course, the present disclosure is not limited thereto.

## Claims

1. A working machine, comprising:
a main body configured to travel based on rotational power of a drive portion, and having a wireless communication function;
an operation rod connected to the main body and configured to be gripped to assist the travel of the main body; and
a controller arranged at an end of the operation rod and configured to operate the main body through wireless communication with the main body.

2. The working machine according to claim 1, wherein
the operation rod is configured to be attachable to and detachable from the main body.

3. The working machine according to claim 1 or 2, wherein
the controller is configured to be attachable to and detachable from the operation rod.

4. The working machine according to any one of claims 1 to 3, wherein
the operation rod is configured to be extendable and retractable, and is configured to be fixable at any length within an extendable and retractable range.

5. The working machine according to any one of claims 1 to 4, wherein
the drive portion is an electric motor.

6. The working machine according to any one of claims 1 to 5, wherein
the working machine is a grass mower, a collector, or a spreader.
